# EUROPÄISCHE PATENTANMELDUNG

(11) **EP 4 000 387 A1**
(43) Veröffentlichungstag der Anmeldung: **25.05.2022**
(21) Anmeldenummer: 20207853.1
(22) Anmeldetag: 16.11.2020
(51) Int. Cl.: A01K 9/00

(54) **TRÄNKESYSTEM**

(71) Anmelder: Justus-Liebig-Universität Gießen, 35390 Gießen (DE)
(72) Erfinder: Vogt, Anina, 35415 Pohlheim (DE); König von Borstel, Uta, 34323 Malsfeld (DE)
(74) Vertreter: Stumpf, Peter

(57) **Zusammenfassung**

Die Erfindung betrifft ein Tränkesystem 100 zum Tränken von Säugetieren umfassend wenigstens eine Reservoirkammer 10, welche zur Aufnahme von Flüssigkeiten oder von Behältnissen für Flüssigkeiten geeignet ist, ein Verbindungselement 11, das so angeordnet ist, dass es die Reservoirkammer 10 mit einem schräg stehenden Saugnuckel 20 flüssigkeitsdurchströmbar verbindet und einen Saugnuckel 20, der so der Reservoirkammer 10 angeordnet ist, dass ein Säugetier Flüssigkeiten durch diesen Saugnuckel 10 aufnehmen kann, wenn es an diesem saugt. Im Speziellen umfasst das Tränkesystem 100 ein Führungselement 50, welches mit der Vorder- oder Unterseite 10a der Reservoirkammer verbunden ist und direkt zum Saugnuckel 20 hinführt.

## Beschreibung

Die vorliegende Erfindung betrifft ein Tränkesystem für Säugetiere insbesondere für Kälber.

### Beschreibung des allgemeinen Gebietes der Erfindung

In der konventionellen Milchviehhaltung werden die Kälber größtenteils direkt nach der Geburt von der Mutter getrennt und durch Personal mittels Tränkesystemen ernährt. Bekannte Tränkesysteme sind Tränkeeimer, Tränkewannen, Tränkewagen, Tränkeautomaten oder Flaschen mit Saugnuckel (Nuckel, Sauger, Milchsauger). In der Natur suchen die Kälber hingegen instinktiv ca. zwei Stunden nach der Geburt den Weg zum Euter der Mutter, um die Kolostralmilch (Biestmilch) aufzunehmen. Neben der konventionellen Tränkung mittels der bekannten Tränkesysteme werden Kälber auch teilweise bei der ersten Mahlzeit gedrencht, um sicherzustellen, dass die passive Immunisierung des Kalbes durch die Gabe der Kolostralmilch erfolgt. Gründe für dieses Vorgehen liegen in dem kurzen Zeitfenster für die passive Immunisierung von ca. 6 Stunden nach der Geburt und dem Umstand, dass die Kälber nicht zuverlässig selbstständig innerhalb dieser 6 Stunden aus den bekannten Tränkesystemen die Kolostralmilch trinken. Zwangstränken (Drenchen) ist jedoch in Deutschland ohne medizinische Begründung laut Tierschutzgesetz unzulässig (§ 3 (9) TierSchG) und auch problematisch, da es durch die üblicherweise verabreichte Menge von bis zu 4 Liter zu erzwungenem Pansentrinken bei den Kälbern kommen kann.

Da die Kälber Schwierigkeiten haben, den künstlichen Saugnuckel bei den bekannten Tränkesystemen zu verstehen, müssen sie erst durch das Personal trainiert werden. Das ist abhängig vom jeweiligen Kalb sehr zeitaufwendig. Problemtrinker können noch bis zu 4 Tage nach der Geburt individuelle Betreuung benötigen. Kälber, die Probleme haben, von den bekannten Tränkesystemen zu trinken und nicht genügend Aufmerksamkeit vom Personal bekommen, können jedoch wichtige Mahlzeiten verpassen, wobei eine gute Versorgung gerade in den ersten Tagen entscheidend für die Gesundheit des Kalbes ist. Neben durch Hunger induzierten Stress kommt es auch zur Unterversorgung des Kalbes, was es anfälliger für Krankheiten macht.

In der Natur verläuft die Eutersuche bei Kälbern größtenteils nach der Versuch-und-Irrtum-Methode, indem die Kälber den Körper der Mutter mit ihrem Maul oder Zunge absuchen. Die Eutersuche bei Kälbern richtet sich größtenteils auf die Vorder- und Hinterbeine der Mutter und die Kälber zeigen eine Präferenz, ihre Nase nach oben und - wenn möglich - in eine Aussparung (Achsel oder Leistengegend) zu stupsen. Der Bereich, auf den sich das Kalb bei der Suche nach den Zitzen konzentriert, ist stark von der Konformation des Unterbauches des Muttertieres abhängig. Wenn das Euter am höchsten Punkt des Unterbauches lokalisiert ist, konzentriert sich die Suche fast ausschließlich auf die Euterregion. Liegt das Euter hingegen tiefer als die Brustbeinregion, richtet sich die Suche verstärkt auf die Vorderbeine der Mutterkuh oder aber in Regionen oberhalb der Zitzen. Das Aussehen und die Konformation des Unterbauches und Euters des Muttertieres wurden in mehreren Studien als entscheidender Faktor für die Zeitspanne von der Geburt bis zum ersten Saugvorgang durch (motivierte) Kälber beschrieben. Untersuchungen zeigen, dass Kälber bei der Eutersuche intuitiv versuchen, ihre Nasen unter das Abdomen der Mutterkuh zu bringen und anschließend hoch zu schieben, was vermutlich damit zu begründen ist, dass bei allen Arten von wildlebenden Huftieren (Ungulata) das Euter jeweils der höchste Teil des weiblichen Unterbauches ist. In Ergänzung dazu zeigen Studien aus der Verhaltensforschung, dass Kälber auf der Suche nach der Zitze zunächst an den Beinen beginnen und dann den Suchvorgang entlang einer horizontalen Fläche, nämlich der Unterseite des Abdomens der Mutter auf Höhe ihres Kopfes weiterführen. Die Tränkesysteme im Stand der Technik sind nicht intuitiv für das Kalb verständlich. Bei diesen Tränkesystemen wird der Saugnuckel durch ein Loch in der Boxen- oder Kälberiglutür gehängt. Das Kalb befindet sich also vor einer senkrechten Fläche mit einem waagerecht stehenden Nuckel, der Intuition nach sucht es jedoch unterhalb einer waagrechten, leicht ansteigenden Fläche nach einem eher senkrecht hängenden Nuckel.

Selbstverständlich ist das Muttertier maßgeblich an der Eutersuche beteiligt, da es das Kalb mit Interaktion, Vokalisation, etc. dabei unterstützt, das Euter zu lokalisieren. Zusätzlich positioniert sich das Muttertier entsprechend vor dem Kalb. Es ist bekannt, dass es bei Kälbern zum Besaugen von Artgenossen oder zur Eutersuche bei betreuenden Personen kommt, wenn man sie direkt nach der Geburt von der Mutter trennt. Ebenso suchen diese Kälber ein Euter an Gegenständen, die sich im Stall befinden, z.B. auf der Unterseite des Futtertroges. Gegenseitiges Besaugen ist bei künstlich aufgezogenen Milchkälbern weit verbreitet und zu 78% auf die Leistengegend anderer Kälber gerichtet. Dies legt nahe, dass die Hilfe durch das Muttertier zur Euterlokalisation nicht zwingend notwendig ist. Eigene Beobachtungen von Kälbern mit Zugang zu Gruppentränken zeigen, dass Kälber häufig an die Tränke angesetzt werden, dort kurz saugen, dann aber abfallen, um zu ihren Artgenossen zu laufen und diese am Nabel oder zwischen den Beinen zu besaugen. Das macht deutlich, wie schlecht verständlich die Tränkesysteme im Stand der Technik für die Kälber sind. Es besteht also die Notwendigkeit, Tränkesysteme zu optimieren, indem natürliche Reize der Mutterkuh simuliert werden.

### Stand der Technik

Üblicherweise werden derzeit Tränkesysteme mit waagerecht stehendem Saugnuckel verwendet. Das Tränkesystem wird entweder an der Innenseite der Kälberiglu- oder Boxenwand angebracht oder für gewöhnlich außen, sodass der Saugnuckel des Tränkesystems durch ein Loch im Gitter des Kälberiglus oder der Kälberbox in den Innenbereich hereinragt.

Weiterhin sind auch Tränkesysteme bekannt, die einen schräg nach unten stehenden Saugnuckel aufweisen, welcher hinsichtlich der Anordnung ähnlich der Zitzen des Muttertieres ist.

Der Nachteil der aktuellen Tränkesysteme ist, dass diese eine für Kälber unintuitive Anordnung des Saugnuckels am Tränkesystem aufweisen. Bei der natürlichen Eutersuche versuchen Kälber intuitiv ihr Maul unter das Abdomen der Mutterkuh zu bringen und tasten sich von dort weiter. Sie suchen also der Intuition nach unterhalb einer waagerechten oder leicht ansteigenden bzw. leicht abfallenden Fläche nach einer eher senkrecht hängenden Zitze bzw. im Falle der bekannten Tränkesysteme dem Saugnuckel. Bei den Tränkesystemen im Stand der Technik befindet sich das Kalb jedoch vor einer senkrechten Fläche (Eimerwand, Wannenwand, Tränkautomatenwand bzw. Boxen- oder Kälberigluwand) mit einem waagerecht stehenden Saugnuckel. Dies ist für das Kalb nicht gut verständlich, erschwert das Auffinden des Saugnuckels und bedarf somit viel Arbeitszeit des Personals, um den Kälbern das Trinken aus den Tränkesystemen beizubringen. Dieses Problem wird aktuell dadurch gelöst, dass man das Kalb immer wieder von Hand ansetzt, bis es eigenständig das Tränkesystem verstanden hat. Dies kann jedoch bei Problemkälbern durchaus vier Tage dauern, während der das Kalb eine intensive Betreuung benötigt. In Arbeitsspitzen mit Personal- und Zeitmangel kann dies schnell auch eine kritische Unterversorgung der Kälber bedingen. Das gilt ganz besonders auch beim Transport von Kälbern, wo innerhalb einer 1-stündigen Versorgungspause alle Kälber vom Transporter entladen und getränkt werden müssen, sodass hier standardmäßig Zeitmangel herrscht.

Diese Problematik lässt sich auch auf andere Säugetiere übertragen, bei welchen das Säugen ebenfalls im Stehen erfolgt und bei denen aus verschiedenen Gründen kein Säugen durch ein Muttertier möglich ist. Beispielhaft sind hier Schafe, Ziegen, Pferde und Kamele genannt, da es in der Haltungspraxis zu einer Trennung des Muttertiers vom Jungtier vor Beendigung der Säugephase kommen kann.

### Aufgabe

Die Aufgabe der vorliegenden Erfindung ist ein verbessertes Tränkesystem für die Versorgung von Säugetieren bereitzustellen. Dabei ist es unerheblich, welche Flüssigkeit das Säugetier trinken soll, es kann sich also um Milch, Milchersatz, Milchaustauscher, Wasser, Elektrolytlösungen oder flüssige Medikamente handeln. Dieses verbesserte Tränkesystem soll es ermöglichen, dass ein Jungtier den Weg zum Saugnuckel deutlich schneller als bei den herkömmlichen Tränkesystem von alleine vollziehen kann, sodass der Arbeitszeitbedarf für das Anlernen des Tränkens der Säugetiere reduziert wird.

### Lösung der Aufgabe

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Das erfindungsgemäße Tränkesystem 100 ist so aufgebaut, dass ein auf einem Untergrund 200 stehendes Säugetier an das Tränkesystem 100 herantreten und an diesem saugen kann, um Flüssigkeiten wie z.B. Milch, Milchersatz, Milchaustauscher, Wasser, Elektrolytlösungen oder flüssige Medikamente aufzunehmen.

Das erfindungsgemäße Tränkesystem 100 zum Tränken von Säugetieren umfasst wenigstens:
Eine **Reservoirkammer 10,** welche zur Aufnahme von Flüssigkeiten oder von Behältnissen für Flüssigkeiten geeignet ist. Geeignete Flüssigkeiten sind beispielsweise Milch, Milchersatz, Milchaustauscher, Wasser, Elektrolytlösungen oder flüssige Medikamente. Die Reservoirkammer 10 kann in Form eines Eimers oder einer Wanne oder eines Containers ausgebildet sein, sie kann aber auch eine andere zweckmäßige Form aufweisen. Die Reservoirkammer 10 kann einen flachen Boden aufweisen, dieser stellt dann die Unterseite 10a der Reservoirkammer dar. Diese Ausführungsform wird bevorzugt, weil eine Reservoirkammer 10 mit einem flachen Boden auf einen Untergrund abgestellt werden kann, ohne dass die Reservoirkammer 10 umfällt. Die Reservoirkammer 10 kann alternativ auch einen gekrümmten, halbkugelförmigen oder trichterförmigen Boden aufweisen. Diese Anordnung hat den Vorteil, dass sich Reste der Flüssigkeit besser am Boden der Reservoirkammer 10 sammeln und leichter leergetrunken werden können.

Ein **Verbindungselement 11,** das so an der Reservoirkammer 10 angeordnet ist, dass es die Reservoirkammer 10 mit einem Saugnuckel 20 flüssigkeitsdurchströmbar verbindet. Das Verbindungselement 11 kann beispielsweise ein Schraubverschluss mit einem Dichtungsring, ein Flansch oder ein Rohr mit Gewinde sein. In einer Ausführungsform ist der Saugnuckel 20 direkt mit der Reservoirkammer 10 flüssigkeitsdurchströmbar verbunden, so dass kein Verbindungselement 11 nötig ist.

Ein **Saugnuckel 20,** der so an der Reservoirkammer 10 angeordnet ist, dass ein, auf einem Untergrund 200 unterhalb des Saugnuckels 20 stehendes Säugetier Flüssigkeiten durch diesen Saugnuckel 20 aufnehmen kann, wenn es an diesem saugt. Der Untergrund 200 ist in der Regel der Boden eines Stalles oder einer Box oder eines Kälberiglus. Der Saugnuckel 20 weist dabei einen Saugnuckelwinkel α von 40° bis 70° auf. Der Saugnuckelwinkel α ist der Winkel zwischen der Längsachse des Saugnuckels und einer waagrechten gedachten Linie. Der Saugnuckel 20 ist dazu vorzugsweise an der Unterseite 10a der Reservoirkammer 10 angeordnet. In einer Ausführungsform ist der Saugnuckel 20 an der Vorderseite der Reservoirkammer 10 angeordnet. In jedem Fall ist die Anordnung des Saugnuckels 20 an der Reservoirkammer 10 dergestalt, dass das Säugetier einfachen Zugang zum Saugnuckel 20 hat. Vorzugsweise ist der Saugnuckel an der untersten Stelle der Reservoirkammer 10 angeordnet, damit das säugende Tier den gesamten Inhalt der Reservoirkammer 10 trinken kann. Die Größe und Form des Saugnuckels ist abhängig von der Tierart und dem Alter des saugenden Tieres. Dem Fachmann ist eine Vielzahl von geeigneten Saugnuckeln bekannt.

Ein **Führungselement 50,** welches so zur Reservoirkammer 10 ausgerichtet ist, dass es ein Säugetier direkt zum Saugnuckel 20 hinführt. Dieses Führungselement 50 simuliert den Unterbauch eines Muttertiers, sodass ein Säugetier selbstständig den Saugnuckel finden kann. Dies wird erreicht, indem das Führungselement über dem Saugnuckel 20 angeordnet ist. Es ist dabei wesentlich, dass zwischen dem Saugnuckel 20 und dem Führungselement 50 ausreichend Platz ist, damit das Säugetier mit seiner Schnauze den Saugnuckel 20 umschließen kann. Der Abstand zwischen dem Saugnuckel 20 und dem Führungselement 50 darf jedoch nicht wesentlich größer als der für das Umschließen mit dem Maul benötigte Abstand sein, weil sonst das Führungselement 50 seine erfindungsgemäße Aufgabe nicht mehr erfüllt, da es nicht mehr zum Saugnuckel hinführt. Für den Einsatz beim Tränken von Kälbern beträgt dieser Abstand vorzugweise ca. 7 cm. Für den Einsatz beim Tränken von anderen Tierarten wird dieser Abstand der Anatomie entsprechend angepasst. Diese Anpassung ist dem Fachmann unmittelbar verständlich.

Das erfindungsgemäße Tränkesystem kann auch eine Mehrzahl von Saugnuckeln aufweisen, wie es im Stand der Technik bekannt ist. Bei einer Mehrzahl von Saugnuckeln an einem Tränkesystem kann entweder für jeden Saugnuckel ein eigenes Führungselement 50 vorgesehen sein, oder ein gemeinsames Führungselement 50 für alle Saugnuckel. Im zweiten Fall muss die Größe des Führungselementes 50 so angepasst werden, dass bei jedem Saugnuckel die Führung des saugenden Tieres zum Saugnuckel hin gewährleistet ist.

Beim Gebrauch eines Tränkesystems wird dieses durch Milchreste, Speichel und andere in einem Tierstall vorhandene Kontaminationsquellen verunreinigt. Es ist daher notwendig, dass alle Bauteile des Tränkesystems gut zu reinigen sind, das heißt, dass sie abwaschbar sind und beständig gegenüber den bekannten sauren, basischen und neutralen Reinigungsmitteln sind. Daher wird auch das erfindungsgemäße Führungselement 50 aus einem dafür geeigneten Material gefertigt. In einer Ausführungsform wird das Führungselement 50 aus einem Schaumstoff hergestellt. Das hat den Effekt, dass das Führungselement 50 weich und formbar ist und somit den Unterbauch eines Muttertieres gut simuliert. Außerdem wird durch Schaumstoff als Material die Verletzungsgefahr für das saugende Tier verringert. In einem anderen Ausführungsbeispiel wird das Führungselement 50 aus Holz, Kunststoff oder Metall hergestellt. Das hat den Effekt, dass das Führungselement 50 robust ist. In einer weiteren Ausführungsform wird das Führungselement 50 aus Holz, Kunststoff oder Metall mit einem Überzug aus Schaumstoff versehen, um sowohl die Robustheit als auch die Weichheit und Formbarkeit sowie die geringere Verletzungsgefahr zu erreichen. Bei jeder Ausführungsform kann das Führungselement 50 zusätzlich noch mit einem abwaschbaren und wasserfesten Überzug aus einem Kunststoff versehen werden, um die Reinigung des Führungselementes 50 zu erleichtern.

In einer Ausführungsform ist das Führungselement 50 mit der Unterseite 10a der Reservoirkammer 10 verbunden und in einem Führungswinkel β zwischen 10° und -10° in Bezug auf eine horizontale Linie ausgerichtet. In einer anderen Ausführungsform ist das Führungselement 50 mit der Vorderseite der Reservoirkammer 10 verbunden und in einem Führungswinkel β zwischen 10° und -10° in Bezug auf eine horizontale Linie ausgerichtet. Wenn die Reservoirkammer 10 eine ebene Unterseite hat, dann ist das Führungselement 50 in einem Führungswinkel β zwischen 10° und -10° im Bezug zur Unterseite der Reservoirkammer 10 angeordnet.

In einer Ausführungsform des erfindungsgemäßen Tränkesystems 100 ist das Führungselement 50 aus wasserfestem Schaumstoff (z.B. expandiertes Polystyrol, Polyurethan) ausgeführt. In einem weiteren Ausführungsbeispiel weist das Führungselement 50 aus wasserfestem Schaumstoff einen abwaschbaren und wasserfesten Überzug aus einem Kunststoff (z.B. PET) auf. Diese Ausführungsform weist den Vorteil auf, dass sie abwaschbar und formstabil ist. Gleichzeitig ist das Führungselement 50 aber weich genug, um Verletzungen des Säugetiers beim Trinken zu vermeiden und gleichzeitig biegsam, sodass das Personal das Führungselement bei Bedarf nach oben wegbiegen kann.

In einer Ausführungsform des erfindungsgemäßen Tränkesystems 100 ist das Führungselement 50 als eine massive Platte aus Holz, Kunststoff oder Metall ausgebildet. Dies ist besonders robust und kostengünstig. Hierbei ist es möglich, dass das Führungselement 50 noch einen Überzug aus einem wasserfesten Schaumstoff umfasst, um Verletzungen des Säugetiers beim Trinken zu vermeiden. Der Schaumstoff besteht dabei aus einem hautfreundlichen Material z.B. expandiertes Polystyrol oder Polyurethan. In einem weiteren Ausführungsbeispiel weist das Führungselement 50 aus Holz, Kunststoff oder Metall mit dem Überzug aus einem wasserfesten Schaumstoff zusätzlich einen abwaschbaren und wasserfesten Überzug aus einem Kunststoff (z.B. PET) auf. Diese Ausführungsform weist den Vorteil auf, dass sie abwaschbar und formstabil ist. Gleichzeitig ist das Führungselement 50 aber weich genug, um Verletzungen des Säugetiers beim Trinken zu vermeiden. Bei dieser Ausführungsform können auch Scharniere zwischen Reservoirkammer 10 und Führungselement 50 genutzt werden, um das Führungselement hochzuklappen und die Handhabung zum manuellen Anlernen oder bei der Reinigung zu erleichtern.

In einer Ausführungsform des erfindungsgemäßen Tränkesystems 100 ist das Führungselement 50 eine Vergrößerung der Unterseite 10a der Reservoirkammer 10. In diesem Fall stellt also die vergrößerte Unterseite 10a das Führungselement 50 dar und simuliert den Unterbauch eines Muttertiers, sodass ein Säugetier selbstständig den Saugnuckel finden kann.

In einer Ausführungsform ist das Führungselement 50 ein Gitter. Das hat den Vorteil, dass die Materialkosten geringer sind als bei einer massiven Platte aus Holz, Kunststoff oder Metall. Auch bei dieser Ausführungsform kann das Führungselement 50 einen Überzug aus einem wasserfesten Schaumstoff aufweisen und zusätzlich einen abwaschbaren und wasserfesten Überzug aus einem Kunststoff (z.B. PET).

Die Größe des Führungselements 50 richtet sich nach der Säugetierart. Kleinere Säugetiere wie beispielsweise Lämmer oder Zicklein benötigen ein kleineres Führungselement als beispielsweise Kälber. Bei einem Tränkesystem für nur ein Kalb, also ein Tränkesystem mit einem Saugnuckel, ist die Größe des Führungselements 50 maximal ca. 40 x 45 cm. Bei einem Tränkesystem für mehrere Säugetiere (beispielsweise einer Gruppentränkewanne) muss die Größe des Führungselement 50 an die Größe der Reservoirkammer 10 angepasst werden. Die Größe des Führungselements 50 hat einen Effekt auf die Praktikabilität und die Handhabung des gesamten Tränkesystems. Je größer das Führungselement 50 ist, desto umständlicher ist es in der Handhabung und in der Reinigung. Wenn das Führungselement 50 allerdings zu klein ist, dann verliert es den gewünschten Effekt, nämlich die Anatomie des Bauches des Muttertieres zu simulieren und damit das säugende Tier zum Saugnuckel 20 hinzuführen.

In einer Ausführungsform weist das Führungselement 50 eine ebene, planare Form auf. Diese Form ist günstiger in der Produktion. In einem anderen Ausführungsbeispiel weist das Führungselement 50 in Anlehnung an die Unterbauchform eines Muttertieres eine zumindest abschnittweise gekrümmte Form auf. Dabei weist die konvexe Seite nach unten, um eine möglichst naturgetreue Simulation des Unterbauches eines Muttertieres zu erzielen. Diese Form unterstützt besonders vorteilhaft die intuitive Suche des saugenden Tieres nach der Zitze.

In einer Ausführungsform weist das Tränkesystem 100 noch mindestens ein Halteelement 60 auf. Dieses ist mit der Reservoirkammer 10 verbindbar und so ausgebildet, dass das Tränkesystem 100 direkt an einem Boxengitter oder Kälberiglu einhängbar ist. Dabei kann es sich z.B. um einen oder mehrere Haken, Clips, Scharniere oder Gummizüge handeln. Dabei ist das Halteelement 60 so angeordnet, dass der Platz zwischen der Unterseite 10a der Reservoirkammer 10 und dem Untergrund 200 ausreicht, damit ein Säugetier den Saugnuckel 20 in der natürlichen physiologischen Saughaltung erreichen kann. Der Abstand zwischen dem Untergrund 200 und der Unterseite 10a der Reservoirkammer 10 beträgt dabei bei einem Tränkesystem für Kälber vorzugsweise 50 bis 80 cm. Der optimale Abstand unterscheidet sich aber von Tierart zu Tierart. Eine Anpassung auf die jeweilige optimale Höhe ist ohne Probleme möglich und erschließt sich direkt dem Fachmann.

In einer weiteren Ausführungsform weist das Tränkesystem 100 wenigstens ein Standelement 70 auf. Dieses ist mit der Reservoirkammer 10 verbindbar, vorzugsweise ist es mit der Unterseite 10a der Reservoirkammer 10 verbindbar. Dabei ist das Standelement 70 so angeordnet, dass das Standelement 70 einen Abstand zwischen der Unterseite 10a der Reservoirkammer 10 und dem Untergrund 200 bildet, der ausreicht, damit das Säugetier den Saugnuckel 20 in der natürlichen physiologischen Saughaltung erreichen kann. Der Abstand zwischen dem Untergrund 200 und der Unterseite 10a der Reservoirkammer 10 beträgt dabei bei einem Tränkesystem für Kälber vorzugsweise 50 cm bis 80 cm. Der optimale Abstand unterscheidet sich aber von Tierart zu Tierart. Eine Anpassung auf die jeweilige optimale Höhe ist ohne Probleme möglich und erschließt sich direkt dem Fachmann. Als Standelement 70 können beispielsweise ein oder mehrere Standfüße dienen. Bei der Verwendung von mehreren Standfüßen als Standelement sind diese vorzugsweise untereinander verbunden, um eine höhere Stabilität zu erreichen.

Die Verwendung eines Halteelementes 60 und eines Standelementes 70 ist dabei grundsätzlich kombinierbar.

Der Kern der Erfindung besteht aus dem Führungselement 50, weil dadurch die Säugetiere wie beispielsweise Kälber dazu gebracht werden, den Saugnuckel eines Tränkesystems intuitiv zu finden. Daher umfasst die Erfindung auch ein Nachrüstset, bestehend aus einem Führungselement 50 und einer Vorrichtung zur Befestigung des Führungselements 50 an einem Tränkesystem aus dem Stand der Technik. Als Vorrichtung zur Befestigung kann es sich z.B. um einen oder mehrere Haken, Clips, Scharniere oder Gummizüge handeln. Ebenso kann das beschriebene Nachrüstset, umfassend ein Führungselement 50, formschlüssig oder kraftschlüssig an einem Tränkesystem aus dem Stand der Technik befestigt werden.

### Abbildungslegenden und Bezugszeichenliste

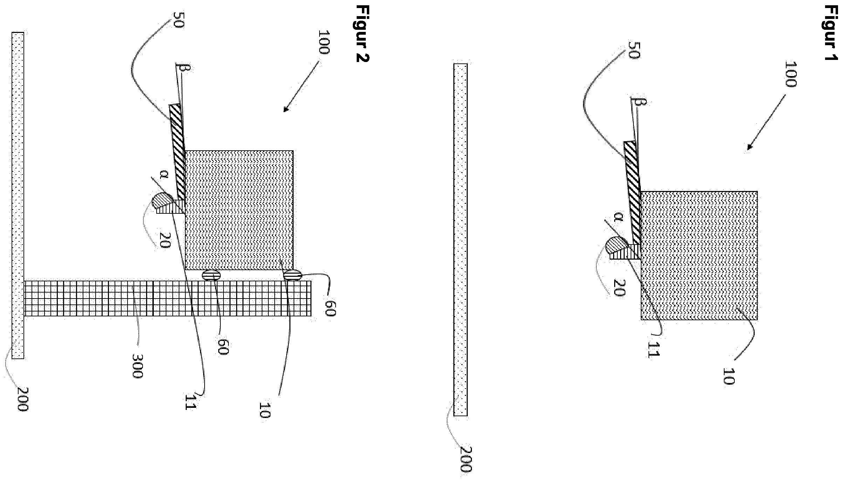

Figur 1 zeigt das Tränkesystem 100 in seiner allgemeinsten Ausführungsform
Figur 2 zeigt das Tränkesystem 100 mit einem Halteelement 60 zur Befestigung an einer Boxen- oder Kälberigluwand 300

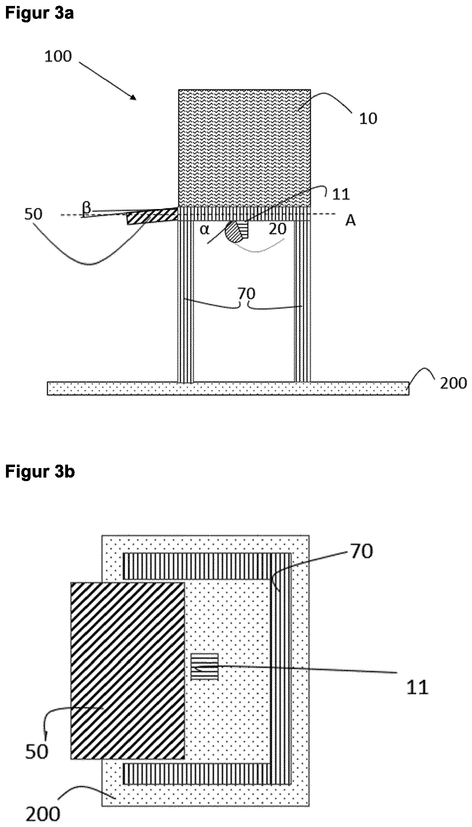

Figur 3a zeigt das Tränkesystem 100 mit Standelementen 70 zum Aufstellen auf dem Untergrund 200.
Figur 3b zeigt einen Querschnitt des Tränkesystems 100 mit Standelementen 70 zum Aufstellen auf dem Untergrund 200 in der Ebene A aus Figur 3a.

### Bezugszeichen

10 Reservoirkammer
10a Unterseite der Reservoirkammer
11 Verbindungselement
20 Saugnuckel
50 Führungselement
60 Halteelement
70 Standelement
100 Tränkesystem
200 Untergrund
300 Boxen- oder Kälberigluwand

## Patentansprüche

1. Tränkesystem (100) zum Tränken von Säugetieren umfassend wenigstens
• eine Reservoirkammer (10), welche zur Aufnahme von Flüssigkeiten oder von Behältnissen für Flüssigkeiten geeignet ist,
• ein Verbindungselement (11), das so angeordnet ist, dass es die Reservoirkammer (10) mit einem Saugnuckel (20) flüssigkeitsdurchströmbar verbindet,
• ein Saugnuckel (20), der über das Verbindungselement (11) so mit der Reservoirkammer (10) verbunden ist, dass ein auf einem Untergrund stehendes Säugetier Flüssigkeiten aus der Reservoirkammer (10) durch diesen Saugnuckel (20) aufnehmen kann, wenn es an diesem saugt, und der einen Saugnuckelwinkel α von 40° bis 70° aufweist,
**dadurch gekennzeichnet, dass** das Tränkesystem (100) weiterhin ein Führungselement (50) aufweist, welches mit der Reservoirkammer (10) verbunden ist, wobei die Verbindung des Führungselements mit der Reservoirkammer (10) sich oberhalb des Saugnuckels befindet und das Führungselement in einem Führungswinkel β zwischen 10° und -10° zur Horizontalen ausgerichtet ist, so dass ein Säugetier mittels des Führungselement (50) zum Saugnuckel (20) geführt werden kann.

2. Tränkesystem (100) gemäß Anspruch 1, **dadurch gekennzeichnet, dass** das Tränkesystem (100) weiterhin mindestens ein Halteelement (60) aufweist, wobei das Halteelement (60) mit der Reservoirkammer (10) verbindbar und so ausgebildet ist, dass das Tränkesystem (100) direkt an eine Boxen- oder Kälberigluwand einhängbar ist.

3. Tränkesystem (100) gemäß Anspruch 1 oder 2, **dadurch gekennzeichnet, dass** das Tränkesystem (100) weiterhin mindestens ein Standelement (70) aufweist, wobei das Standelement (70) mit der Unterseite (10a) der Reservoirkammer (10) verbindbar und so angeordnet ist, dass es einen Abstand zwischen der Unterseite (10a) der Reservoirkammer (10) und einem Untergrund bildet, sodass ein Säugetier den Saugnuckel (20) stehend erreichen kann.

4. Tränkesystem (100) gemäß einem der Ansprüche 1 bis 3, **dadurch gekennzeichnet, dass** das Führungselement (50) eine Platte aus Holz, Kunststoff oder Metall umfasst.

5. Tränkesystem (100) gemäß Anspruch 4, **dadurch gekennzeichnet, dass** das Führungselement (50) einen Überzug aus einem Schaumstoff umfasst.

6. Tränkesystem (100) gemäß Anspruch 5, **dadurch gekennzeichnet, dass** das Führungselement (50) über dem Schaumstoff einen abwaschbaren und wasserfesten Überzug aus einem Kunststoff aufweist.

7. Tränkesystem (100) gemäß einem der Ansprüche 1 bis 3, **dadurch gekennzeichnet, dass** das Führungselement (50) aus Schaumstoff ausgeführt ist.

8. Tränkesystem (100) gemäß Anspruch 7, **dadurch gekennzeichnet, dass** das Führungselement (50) aus Schaumstoff einen abwaschbaren und wasserfesten Überzug aus einem Kunststoff aufweist.

9. Tränkesystem (100) gemäß einem der vorigen Ansprüche, **dadurch gekennzeichnet, dass** das Führungselement (50) planar ausgebildet ist.

10. Tränkesystem (100) gemäß einem der Ansprüche 1 bis 8, **dadurch gekennzeichnet, dass** das Führungselement (50) zumindest abschnittsweise gekrümmt ausgebildet ist.

11. Tränkesystem (100) gemäß einem der vorhergehenden Ansprüche, **dadurch gekennzeichnet, dass** die Reservoirkammer (10) zur Aufnahme von Milch, Milchersatz, Milchaustauscher, Wasser, Elektrolytlösungen oder flüssigen Medikamenten oder zur Aufnahme von Behältnissen für Milch, Milchersatz, Milchaustauscher, Wasser, Elektrolytlösungen oder flüssige Medikamente geeignet ist.
